Europäisches Patentamt

European Patent Office

Office européen des brevets

(19)

(11) Publication number: **0 431 661 A2**

## (12) EUROPEAN PATENT APPLICATION

(21) Application number: 90203046.9

(22) Date of filing: 16.11.90

(51) Int. Cl.5: **B32B 29/02**, D21H 27/34

(30) Priority: 16.11.89 BE 8901218

(43) Date of publication of application:
12.06.91 Bulletin 91/24

(84) Designated Contracting States:
DE ES FR GB IT NL SE

(71) Applicant: Verstraete, Guy
Overbekeplein 15
B-8500 Kortrijk(BE)

(72) Inventor: Verstraete, Guy
Overbekeplein 15
B-8500 Kortrijk(BE)

(74) Representative: Dopchie, Jean-Marc
KORTRIJKS OCTROOI- EN MERKENBUREAU
BVBA - K.O.B. Kennedypark 21c
B-8500 Kortrijk(BE)

(54) **Process for manufacturing wallcovering with embossed patterns in the top textile layer and wallcovering manufactured by this process.**

(57) Process for manufacturing wallcovering with a top textile layer produced in an embossed pattern by subjecting a laminate (a textile layer bonded onto a backing layer) to different treatments to improve the properties, then applying a layer of water-based adhesive to the paper layer and pressing a second paper layer on a cellulose base on to it, then pressing the embossed pattern into it, and then applying a coating to the rear side in order to obtain a flat rear side, following which the whole combination is dried and then pressed in order to obtain a flat finish. A wallcovering comprising a laminate onto which a second paper layer is bonded, while these layers are provided with permanent depressions, and the rear side of which is provided with a flattening coating.

EP 0 431 661 A2

## "PROCESS FOR MANUFACTURING WALLCOVERING WITH EMBOSSED PATTERNS IN THE TOP TEXTILE LAYER, AND WALLCOVERING MANUFACTURED BY THIS PROCESS".

Walls are often covered with wallcovering which is made entirely of paper which may or may not be provided with patterns and/or motifs, possibly embossed, and which is sold in rolls. It is fixed to the wall with paste. This type of wallpaper and the process of papering walls with it has certain advantages (cost, the simplicity of the process), but a fabric wallcovering is still sometimes preferred, because the aesthetic qualities of fabric (a warmer, more attractive atmosphere with a more durable character) far exceed those of a printed layer of paper.

A first known process for providing walls with a textile wallcovering involves fixing a fabric against the wall by means of hooks or nails on wooden slats which are fixed on the wall. This fabric can be provided with all kinds of motifs, designs and embossed patterns if desired during its manufacture. The disadvantage of the covering used and of this way of covering walls lies in the fact that it is a rather expensive solution, which is also far from simple, so that the main advantages existing with ordinary wallpaper are no longer found here.

According to another known method of providing walls with a textile covering, use is often made of a covering which has a textile layer bonded with adhesive to a bottom paper layer. This product is sold in rolls and is fixed with the paper bottom layer against the wall. This produces the possibility of providing walls with a textile covering, while still more or less retaining the advantages of an ordinary wallpaper (an easy process for hanging on the walls and a relatively low cost of the covering itself).

The textile layer on this wallcovering can comprise, on the one hand, textile yarns (natural or synthetic) lying next to and against each other, and bonded in the same direction onto the paper. For obtaining certain designs, motifs or embossed patterns on the wallcovering, we are in that case restricted to geometrical motifs and/or embossed patterns extending parallel to each other in one specific direction, and these have to be determined by selecting different colours and/or thicknesses of yarns beforehand.

On the other hand, the textile layer on the wallcovering can comprise a woven fabric which is provided with the desired designs, motifs and/or embossed patterns during weaving through selection of the thickness and colour of component textile yarns. This again produces an expensive wallcovering.

The object of the invention is to provide a wallcovering which, on the one hand, has the advantages of ordinary wallpaper (sold in rolls, hung on the walls with paste, and relatively low cost) and, on the other, also gives the advantages of a textile wallcovering (warm atmosphere, durable character), while for obtaining an embossed pattern it is not necessary in such a wallcovering to determine this beforehand by selecting different thicknesses of textile yarns, and in the case of a textile layer made up of yarns bonded next to each other in one direction one is not limited to the direction in which the adjacent textile yarns run, while this last-mentioned embodiment (adjacent bonded yarns) is most suitable for the envisaged advantages of the invention, on account of its lower cost together with the greater number of possible embossed patterns and simpler formation thereof arising through the use of the process according to the invention.

The subject of the invention is, on the one hand, a process in which a textile wallcovering, made up of a top textile layer which is bonded onto a base layer made of paper (for example, crepe) or similar material (such as non-woven material) (a laminate), is treated in a first step in order to obtain a number of technical properties (making fireproof, water-repellent and dust-repellent, Scotchguard treatment, making washable and treating in order to obtain certain surface effects), and in the subsequent steps of the process is characterized in that the laminate is provided on the rear side (the paper layer) with adhesive, and another paper layer is then pressed (laminated) onto it, all this then being taken in a still wet state to a device which through pressing on well-defined places - according to the desired embossed pattern - produces depressions which are visible as raised patterns along the top side of the textile layer, said depressions remaining therein when it leaves the press, due to the fact that they were introduced when the paper was wet, and permanent deformations are produced.

The process according to the invention is further characterized in that the embossed, and still wet wallcovering is taken to a device which applies a coating to the bottom side in order to fill up the depressions on that side and to produce a flat backing, and in that the wallcovering is then fixed in its embossed patterned form through drying in a subsequent step.

Finally, the process according to the invention is also characterized in that the wallcovering is compressed again in its dry state in order to produce a flat finish.

Another subject of the invention is a wallcovering comprising a top textile layer which is bonded onto a bottom layer of paper or similar material, against which a paper layer is bonded, along the bottom side, while at least the top textile layer is provided with depressions which are visible along the top side, and the whole combination is provided on the bottom paper layer with a flattening coating if the depressions come through on the bottom side.

Further features of the process and of the wallcovering according to the invention are illustrated with reference to the description which follows of a possible process according to the invention and a possible embodiment of the wallcovering which is obtained by this process, but without the invention being limited to this possible process and this example of a possible embodiment. This description is illustrated with reference to the appended figures, in which:

Figure 1a is a cross-section of a laminate which is the starting point for the manufacture of a wallcovering according to the invention by the process according to the invention;

Figure 1b is a cross-section of the wallcovering in its preferred embodiment according to the invention, in which the direction of said cross-section is at right angles to the direction of the textile yarns of the top textile layer bonded next to each other;

Figure 2 is a schematic representation of the successive steps which the wallcovering according to the invention undergoes during its manufacture, using the preferred process according to the invention.

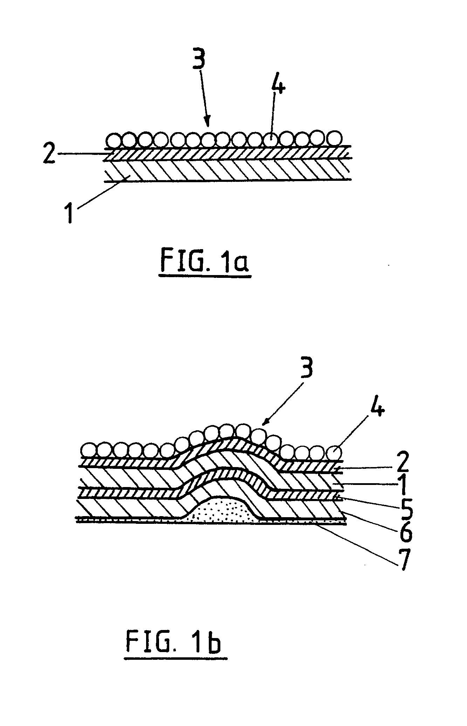

The process for the manufacture of wallcovering with embossed patterns in the top textile layer according to the invention is used on a known laminate already manufactured beforehand by a known process (Fig. 1a), comprising a backing layer (1) made of paper or a similar material, for example crepe 100 to 130 g/m² (preferably 120 g/m²) in weight, which has bonded to it, by means of an adhesive layer (2) extending over the full surface of the backing layer (1), a top textile layer (3) comprising a number of adjacent textile yarns (4) lying laterally against each other and extending in one specific direction over the full surface of the laminate. Another possible composition of the backing layer (1) is non-woven material, which in addition to cellulose is also of polyester or nylon or other plastics and differs from paper only through its strength.

The appended Figure 1a shows a cross-section of this laminate, at right angles to the direction in which the textile yarns (4) extend.

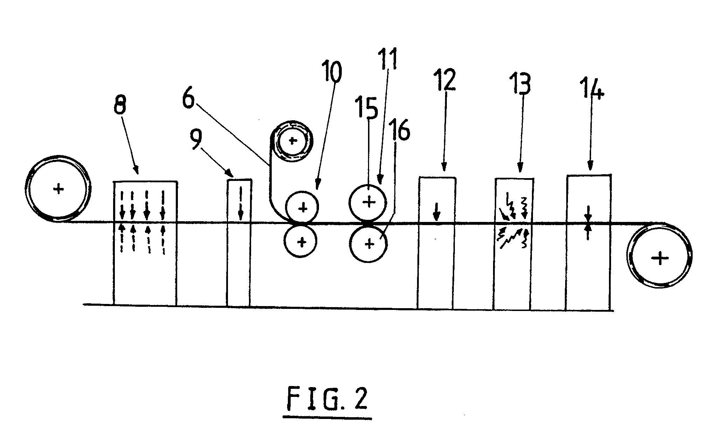

With the use of the process according to the invention, this laminate undergoes a first series of treatments along the textile side, according to known processes and with known devices: making fireproof, making water-repellent and dust-repellent (by the Scotchguard process), making washable and producing known surface effects, as a result of which the wallcovering is given these corresponding properties, and with the process according to the invention being characterized in that these treatments are carried out according to the invention on the laminate as a first step (8) of a whole series of successive steps of the process (Figure 2).

In a subsequent step (9) the process according to the invention is characterized in that a layer of adhesive (5) is applied to the rear side of the laminate (on the crepe paper layer) over the entire surface thereof, said adhesive being a water-based type of adhesive, with a preference for ethylene vinyl acetate.

The process for manufacturing wallcovering with embossed patterns in the top textile layer according to the invention is further characterized in that in a subsequent step (10) a layer of paper (6) is pressed (laminated) onto said adhesive layer, said paper layer being manufactured on a cellulose base, and being of a weight ranging between 70 and 100 g/m², and preferably 90 g/m².

Another feature of the process according to the invention lies in the fact that the water-based adhesive (5), the two paper layers (1) and (6) and the textile layer (3) are wetted.

The process according to the invention is further characterized in that in a subsequent step (11) the laminate with the paper layer (6) bonded to it by means of an adhesive layer (5) is moved along in a wet state between two cylindrical rollers (15) and (16).

One roller (15) is in this case made of hardened metal, and is provided with bulges on its surface, according to the desired embossed pattern which is to be obtained on the wallcovering, by forcing the wallcovering being produced through between these rotating rollers (15) and (16), while the other roller (16), which is disposed so that it interacts with the roller (15), rotating in the opposite direction thereto and touching it, is made of hardened paper with cavities which are complementary to the bulges on the roller (15) going into the cavities during the rotation of both rollers.

The whole wet combination of laminate and paper layer (6) bonded to it is then pressed between said two rollers (15) and (16) and moves along between them along a contact face on both cylindrical rollers (15) and (16) lying between them, while they are rotating.

The laminate, and the paper layer (6) bonded to it, is thereby pushed into the depressions in the roller (16) of hardened paper, through the complementary bulges in the roller (15) of hardened metal. As a result of the wet state of all component parts of the laminate and the paper layer (6), we thereby obtain a permanent deformation (stretching) both of the two paper layers (1) and (6) and of the textile layer (3) and the adhesive layers (2) and (5) lying between them.

More particularly, permanent depressions according to the desired embossed pattern are made locally by the rollers (15) and (16), from the bottom side - the bulges on roller (15) press at certain points against the bottom paper layer (6) and press down all layers (1), (2), (5) and (6) lying above one another at those points into the corresponding complementary cavities in the roller (16) - which, viewed from the top side, cause bulges locally in the textile layer (3). These bulges are obtained through the textile yarns (4) being stretched at those points (as a result of the depressions from the bottom side), the degree of stretching determining the height of a bulge, the width of a bulge being determined by the number of adjacent stretched yarns, and the length of a bulge being determined by the length along which said adjacent yarns have the same stretch. Making bulges of different height (stretch) and possibly different widths and/or lengths abut each other makes it possible to provide all kinds of embossed patterns in the wallcovering.

The embossed patterns can if desired have certain parts without depressions, for the purpose of separation from other parts which do have embossing.

The process for manufacturing wallcovering with embossed patterns in the top textile layer according to the invention is further characterized in that in a subsequent step (12) a coating (7), preferably of latex, is applied to the bottom side (the bottom paper layer (6)), with which coating the bottom side, which has depressions according to the embossing which was pressed into it, on said bottom side, is made flat in order to allow the wallcovering to be hung easily on a wall with paste.

This latex coating (7) must not be too hard, so that during rolling up of the wallcovering it does not crack, and must not give rise to any more problems than ordinary wallpaper during stripping of the wallcovering from the walls.

The process according to the invention is also characterized in that in a subsequent step (13) the different layers lying on top of each other with layers of adhesive between them is dried (fixed).

In a subsequent, final step (14) by which the process according to the invention is characterized, the wallcovering, now in the dry state, is pressed again in order to obtain a flat finish.

The process according to the invention is also characterized in that all the successive operations described above (the various treatments for improving the technical properties of the laminate, applying adhesive to the paper side, pressing the second paper layer onto it, forming the raised pattern by embossing between two rollers, applying a coating on the bottom paper layer, drying, and pressing when dry) are carried out immediately after one another, while the wallcovering is moving continuously through a machine, the laminate being situated on a roll from which it is unrolled running horizontally through the machine and undergoes the different treatments and operations, while it is provided in succession with the component parts appropriate to the different layers (adhesive, second layer of paper, coating) in a continuous manner, ending with a roller along the other side of the machine which continuously rolls up the finished wallcovering.

The paper (6) which is laminated onto the rear side of the laminate is also situated here on a roll which is unrolled continuously, at the level of the place on the machine where said lamination is taking place.

The process according to the invention is also characterized in that it can be carried out on large widths, up to 170 cm, while 140 cm is preferable.

The wallcovering according to the invention, manufactured by using the process according to the invention in a preferred embodiment is characterized in that over its entire surface it is made up of layers lying one below the other and from top to bottom is composed as follows (Figure 1b): a laminate comprising a top textile layer (3), made of textile yarns (4) running in one specific direction next to each other and abutting each other, said yarns (4) being fixed with an underlying adhesive layer (2) to a base layer (1), made of, for example, non-woven material or crepe paper 100 to 130 g/m$^2$ (preferably 120 g/m$^2$) in weight, while said layer of paper (1) is provided on the bottom side with a layer of adhesive (5) (preferably ethylene vinyl acetate) which makes the connection with an abutting layer of paper (6) below it, which is 70 to 100 g/m$^2$ (preferably 90 g/m$^2$) in weight, while in the above-mentioned layers (1), (2), (3), (5) and (6) there is at least one permanent depression produced from the bottom side, which is pushed through all layers into the textile layer (3), and these depressions are formed by a local permanent deformation (stretching) of all layers, this being obtained in the textile layer (3) by the local stretching of a number of adjacent yarns (4), which is produced by the depression being pushed in from the bottom side.

The wallcovering according to the invention is then further characterized in that a coating (7), preferably of latex, lies on the bottom side of the above-mentioned bottom layer of paper (6), which coating fills up depressions occurring in said bottom layer of wallcovering and makes a flat surface along the bottom over the entire bottom side of the wallcovering according to the invention.

The wallcovering according to the invention is further characterized in that in preferred embodiments it is made in large widths, going up to 170 cm, preferably 140 cm, and can be rolled up in rolls.

The process for manufacturing wallcovering with embossed patterns in the top textile layer (3) is also characterized in that it can be used on a laminate of which the top textile layer is a woven fabric (instead of adjacent textile yarns (4)) which is bonded on the base layer (1), while certain patterns or motifs can be woven into said woven fabric, and all the remaining successive operations remain the same as described above.

Consequently, in another possible embodiment according to the invention, the wallcovering is also characterized in that the top textile layer (3) can be a woven fabric (which may or may not be provided with a pattern or motif) in which embossed patterns are pressed, through the fact that at least one permanent depression is provided locally from the bottom side through the paper and adhesive layers lying underneath (these layers remain the same as described above and shown in Figure 1a), which results in a bulge in the top side of the fabric, while the different dimensions (length, width, height) of several adjacent bulges can form the embossed pattern through, for example, providing less high bulges (or parts without bulges) between other parts provided with higher bulges.

The wallcovering according to the invention is fixed to the walls in the same way as wallpaper.

The advantage of the process according to the invention is that wallcoverings which are provided with a top textile layer can be provided with an unlimited number of possible embossed patterns, without any embossing having been made beforehand through thickness differences in the yarns, by selecting the thickness of the different component yarns of said textile layer, which means that for wallcoverings with a textile layer made up of yarns lying next to each other in one direction the possible embossed patterns are no longer restricted to those extending in the direction of the yarns.

The advantage of the wallcovering according to the invention lies in the fact that, on the one hand, it is possible relatively cheaply to provide a wallcovering with a top textile layer which can have all possible embossed patterns (without limitations through the direction of the yarns and/or the possible thicknesses thereof), while, on the other, this wallcovering can be hung on the walls in just as simple a manner as ordinary wallpaper (with paste), so that both cost and ease of hanging can be combined here with the advantageous aesthetic properties of a textile wallcovering.

**Claims**

1. Process for manufacturing wallcovering with a top textile layer in an embossed pattern, which textile layer (3) is bonded onto a base layer (1), which has undergone a permanent deformation - together or not together - with said base layer (1), while along the rear side the depressions are filled up and/or covered by a flat layer of paper or a similar material, **characterized in that** the laminate is treated in a first step (8) in order to obtain better properties (making fireproof, making water-repellent and dust-repellent, making washable, producing surface effects), and in a subsequent step (9) adhesive (5) is applied to the base layer (1), and in a step (10) following that another paper layer (6) is pressed against said base layer (1), following which this whole combination obtained is provided with depressions in a subsequent step (11) while still wet through pressing at well-defined places, which depressions produce a permanent deformation of all layers, following which the embossed and still wet wallcovering is provided with a coating on the paper layer (6) in a subsequent step (12), and the wallcovering is then fixed in a subsequent step (13) by drying it, following which in a final step (14) the wallcovering is compressed in order to obtain a flat finish.

2. Process according to claim 1, **characterized in that** the laminate is made of a base layer of crepe paper 100 g/m² to 130 g/m², preferably 120 g/m², in weight, onto which is bonded a top textile layer (3) which is either made up of a number of adjacent and laterally abutting textile yarns (4) extending in one specific direction, and covering the complete surface of the laminate, or is made up of a woven fabric.

3. Process according to one or more of the preceding claims, **characterized in that** in step (9) of the process an adhesive layer (5) is applied to the rear side of the laminate, over the entire surface thereof, said adhesive being a water-based type of adhesive.

4. Process according to one or more of the preceding claims, **characterized in that** ethylene vinyl acetate is applied to the rear side of the laminate as the adhesive (5) in step (9) of the process.

5. Process according to one or more of the preceding claims, **characterized in that** in step (10) a layer of paper (6) is pressed onto the adhesive layer (5), said paper layer being manufactured on a cellulose base, and being of a weight ranging between 70 g/m² and 100 g/m².

6. Process according to one or more of the preceding claims, **characterized in that** in step (10) a layer of paper (6) is pressed onto the adhesive layer (5), said paper layer being of a weight of 90 g/m².

7. Process according to one or more of the preceding claims, **characterized in that** the adhesive (5) wets the two paper layers (1) and (6) and also the textile layer (3).

8. Process according to one or more of the preceding claims, **characterized in that** in step (11) the laminate with the paper layer (6) bonded to it by means of adhesive layer (5) is pressed and moved along in the wet state between two rotating cylindrical rollers (15) and (16), one roller being made of hardened metal and being provided with bulges on its wall surface, while the other roller (16) is arranged parallel to the roller (15), lying against it and rotating in the opposite direction, and is made of hardened paper, with cavities on the wall surface which are complementary to the bulges on the roller (15), said bulges going into the cavities during the rotation of the two rollers, and being designed according to the embossed pattern which is desired on the wallcovering.

9. Process according to one or more of the preceding claims, **characterized in that** in step (12) a coating is applied to the bottom paper layer (6), so that the depressions occurring on said bottom side according to the embossing which was pressed into it are filled up, and a flat rear side of the wallcovering is achieved.

10. Process according to one or more of the preceding claims, **characterized in that** the coating (7) which is applied in step (12) to the rear side of the wallcovering is a latex coating which is not too hard, so that during rolling up of the wallcovering it does not crack, and which permits easy stripping of the wallcovering off the walls.

11. Process according to one or more of Claims 1 to 10, **characterized in that** all successive steps (9), (10), (11), (12), (13) and (14) are carried out immediately after one another during the continuous forward movement of the wallcovering through a machine, the laminate being on a roll from which it is unrolled while running horizontally through the machine, and undergoes the different treatments and operations, ending at a roller situated along the other side of the machine which continuously rolls up the finished wallcovering, while the paper (6) which is pressed onto the rear side of the laminate is in this case also on a roll and is unrolled continuously at the level of the place on the machine where this paper layer is pressed onto the laminate provided with an adhesive layer (5).

12. Process according to one or more of Claims 1 to 11, **characterized in that** for obtaining wallcovering of large widths it can be carried out going up to 170 cm, with a width of 140 cm being preferred.

13. Wallcovering with a top, embossed textile layer, **characterized in that** from top to bottom it is composed of the following layers: a top textile layer (3) with an adhesive layer (2) bonded onto a base layer (1) of paper or a similar material, such as a crepe paper layer 100 g/m² to 130 g/m², preferably 120 g/m², in weight, then a water-based adhesive layer (5), preferably ethylene vinyl acetate which bonds a paper layer (6), made on a cellulose base 70 g/m² to 100 g/m². preferably 90 g/m², in weight, and finally a coating (7), preferably a latex coating, which forms the flat rear side of the wallcovering.

14. Wallcovering according to Claim 13, **characterized in that** all layers, with the exception of the coating (7), have local depressions which are pushed through all layers into the textile layer (3), and are permanent through a permanent deformation - stretching - of all layers, while the coating (7) flattens these depressions again on the rear side of the wallcovering, and these depressions form level differences making up the desired embossed pattern on the front side of the wallcovering.

15. Wallcovering according to Claim 12 and 13, **characterized in that** it is of a width going up to 170 cm, with a width of 140 cm being preferred.

FIG. 1a

FIG. 1b

FIG. 2